(19) Europäisches Patentamt
European Patent Office
Office européen des brevets

(11) **EP 2 017 228 B1**

(12) **EUROPEAN PATENT SPECIFICATION**

(45) Date of publication and mention
of the grant of the patent:
**25.12.2013 Bulletin 2013/52**

(51) Int Cl.:
*C02F 1/44* *(2006.01)*   *B01D 63/12* *(2006.01)*
*B01D 61/02* *(2006.01)*   *C02F 101/10* *(2006.01)*
*C02F 1/66* *(2006.01)*   *C02F 103/08* *(2006.01)*

(21) Application number: **07741669.1**

(22) Date of filing: **16.04.2007**

(86) International application number:
**PCT/JP2007/058233**

(87) International publication number:
**WO 2007/129530 (15.11.2007 Gazette 2007/46)**

(54) **PROCESS FOR PRODUCING FRESHWATER**

VERFAHREN ZUR HERSTELLUNG VON FRISCHWASSER

PROCÉDÉ DE PRODUCTION D'EAU DOUCE

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **09.05.2006 JP 2006129875**

(43) Date of publication of application:
**21.01.2009 Bulletin 2009/04**

(73) Proprietor: **TORAY INDUSTRIES, INC.
Tokyo 103-8666 (JP)**

(72) Inventors:
• **TANIGUCHI, Masahide,
Toray Industries, Inc.
Otsu-shi, Shiga 520-8558 (JP)**

• **KOJIMA, Yoshitsugu,
Toray Industries, Inc.
Otsu-shi, Shiga 520-8558 (JP)**
• **MIYOSHI, Toshiro,
Toray Industries, Inc.
Otsu-shi, Shiga 520-8558 (JP)**

(74) Representative: **Hager, Thomas Johannes
Hoefer & Partner
Patentanwälte
Pilgersheimer Strasse 20
81543 München (DE)**

(56) References cited:
EP-A1- 1 468 964      WO-A1-03/062151
WO-A2-2005/009908    JP-A- 11 070 325
JP-A- 11 070 325       JP-A- 2000 301 148
JP-A- 2001 239 134     JP-A- 2005 224 651
JP-A- 2005 224 651     JP-A- 2005 246 281

EP 2 017 228 B1

**Description**

The present invention relates to a method for producing fresh water to obtain fresh water from raw water using a reverse osmosis membrane or nano-filtration membrane (hereinafter, these are collectively called semi-permeable membrane), specifically to a method for producing fresh water capable of preventing performance deterioration of a reverse osmosis membrane and obtaining fresh water efficiently.


BACKGROUND ART

Being accompanied by deterioration of a water environment recent years, water treatment techniques have become more important than ever before. In particular, separation membranes have been adopted as a core of water treatment techniques because of their high separation accuracy. Above all, a reverse osmosis membrane and nano-filtration membrane capable of separating and removing ions have been utilized for removing hardness and harmful components of groundwater for producing water suitable for drinking, and have been applied to produce fresh water from seawater, so-called, "seawater desalination." Ground water has been originally used as a water source clearer than surface water, but it is difficult to remove ion components and harmful chemical  substances through clarification action obtained by infiltration in ground, so purification by a nano-filtration membrane or reverse osmosis membrane has been required resulting from environment contamination in recent years.

Meanwhile, seawater desalination has conventionally been in actual use mainly by thermal desalination in the Middle East region where water resource is extremely few and heat resource of petroleum is very abundant, but in regions other than the Middle East where heat source is not abundant, a reverse osmosis method with high energy efficiency is adopted, and a number of plants have been constructed and actually operated in Caribbean islands and Mediterranean areas. Recently, improvement of reliability and cost-reduction thanks to technical advancement on the reverse osmosis method progress; even in the Middle East, a lot of seawater desalination plants based on the reverse osmosis method have been started in construction.

When seawater is directly passed through a reverse osmosis membrane, ordinarily from invasion of suspended solids, living organisms and the like contained in seawater, there arise troubles that the membrane surface is damaged, the membrane performance (permeability, rejection performance)is deteriorated due to attachment on the membrane surface and the channel to the membrane is obstructed. Therefore, after seawater is clarified by various kinds of pre-treatments, it  is generally supplied to a reverse osmosis membrane. As the pre-treatment method, there are sand filtration, coagulation sedimentation, dissolved air floatation, microfiltration membrane, ultrafiltration membrane and the like, thereby suspended solids and microbes can be fairly removed. However, since assimilable organic carbon (AOC) which can be foods to microbes cannot be completely removed even by the various kinds of pre-treatments; when operated for a long time, microbes gradually proliferate on the surface of a reverse osmosis membrane based on AOC contained in feed water, causing the foregoing trouble (this is called bio-fouling). Hence, scheduled removal of microbes (washing) becomes necessary.

As this scheduled washing method, intermittent cleaning with sodium hydrogen sulfite and a special bactericide (Non-patent document 1) and the like are listed. The method of sodium hydrogen sulfite has been conventionally adopted, but there is a case that proliferation of microbes is accelerated depending on situations (Non-patent documents 2 and 3). Although these antiseptic washes are carried out at a feed water side, microbes do not essentially permeate into a reverse osmosis membrane, in case where a reverse osmosis membrane is damaged, there is a risk that bactericides etc. leak into a permeate side. Thus, in a plant for an application of drinking water, washing is conducted using acid which does not cause any problem even in case that it is mixed into a permeate side  (Non-patent document 1).

Washing using acid has a merit that washing can be carried out without modifying operation conditions during a continuous operation. The concentrate and permeate obtained during acid washing, except that they need to be neutralized to about pH 6 of a dischargeable level or quality of drinking water, do not contain harmful substances, so neutralization treatment with alkali is continuously conducted, thereby to obtain fresh water continuously, which is very efficient.

However, recently in seawater desalination, to satisfy a severe standard of water quality, a reverse osmosis two-step treatment that fresh water once subjected to reverse osmosis treatment is further treated by a low-pressure reverse osmosis membrane has become common; further, to satisfy a standard of water quality on boron, an alkali-adding two-step treatment that alkali is added to feed water in the second step of reverse osmosis membrane is often adopted (Patent document 2). In this case, alkali must be added to permeate of the reverse osmosis membrane in the first step to raise a pH to about 9 to 10 for example. However, in carrying out the foregoing acid washing, permeate of the first step is neutralized, and further alkali must be added by such amount that a pH of feed water in the second step can be raised. Further, since the pH of permeate and concentrate of the second step becomes high, acid needs to neutralize the high pH. Thus, there increase the  amounts of acid and alkali necessary for pH adjustment in the first and second steps, respectively, which is not efficient, increasing desalination costs.

Patent document 1: Japanese Patent No. 3087750 (claim 1)
Patent document 2: Japanese Patent No. 3319321 (paragraphs [0006] to [0013])
Non-patent document 1: Dow Chemical Company, AQUCAR RO-20 catalog (2005)
Non-patent document 2: A.B. Hamida, I Moch Jr., Desalination & Water Reuse, 6/3, 40-45 (1996)
Non-patent document 3: L.E. Applegate, C.W. Erkenbrecher, Desalination 65, 331-359 (1987)

WO 2005/009908 A2 discloses a wastewater treatment system comprising separation unit operations which inhibit or promote the formation and precipitation of species by controlling the pH of wastewater to be treated entering into the separation unit operations. The separation unit operations include first and second reverse osmosis devices. The first reverse osmosis device treats wastewater having pH that is less than about 3.5 and the second reverse osmosis device treats wastewater, from the first reverse osmosis device, having a pH that is about 6 or higher.

JP 11-070325 A teaches a membrane filter in which a plurality of membrane units each formed of one or more membrane modules or membrane elements are arranged side by side, these membrane units are divided into a series consisting of membrane units of >=2 in which a raw water supply line, a discharge line of filtered water, a line for washing and instruments are shared. Washing treatment is repeatedly performed in order to maintain filtration performance by successively staggering timing at every membrane unit incorporated in this series.

SUMMARY OF THE INVENTION

PROBLEMS TO BE SOLVED BY THE INVENTION

An object of the present invention is to provide a practical method for producing fresh water being capable of obtaining fresh water with high water quality efficiently and continuously, removing impure materials in water, particularly boron using a semi-permeable membrane unit.

MEANS TO SOLVE THE PROBLEMS

The present invention is defined by the independent claims. The sub-claims contain advantageous embodiments of the invention.

Herein, "raw water or pre-treated water obtained by pre-treatment of raw water" means water at an upstream from a first semi-permeable membrane unit, and "feed water" of the first or second permeable membrane unit means water at a time point when it is actually flowed into said semi-permeable membrane unit. Additionally, it does not matter wether additives such as scale inhibitor are contained or not. In the case where part of feed water is recirculated to upstream from the first semi-permeable membrane unit, a mixed water of the recirculated water and raw water is also called raw water.

EFFECT OF THE INVENTION

According to the present invention, in the case of having a plurality of desalination processes in parallel where raw water or pre-treated water obtained by pre-treatment of raw water is created by a first semi-permeable membrane unit, and at least part of the resulting permeate of the first semi-permeable membrane unit of which pH is raised is treated in the second semi-permeable membrane unit as feed water of a second semi-permeable membrane unit, temporarily a pH of raw water or pre-treated water in part of desalination process A to be supplied to a first semi-permeable membrane unit A1 is lowered and made a pH of the resulting permeate of said first semi-permeable membrane unit A1 lower than that of the feed water of a second semi-permeable membrane unit B2 in other desalination process B to be supplied to a second semi-permeable membrane unit A2, and the permeate obtained from the second semi-permeable membrane unit A2 is mixed with the permeate obtained from the second semi-permeable membrane unit B2 in said other desalination process B. Thus permeate with high water quality can be obtained from raw water efficiently and continuously; in particular, it is possible to obtain permeate with high water quality suitable for drinking that boron concentration is decreased from seawater, efficiently and continuously.

BRIEF DESCRIPTION OF THE DRAWINGS

Fig. 1 is a schematic flowchart showing one mode of apparatus for producing fresh water applicable to the present invention.
Fig. 2 is a schematic flowchart showing other mode of apparatus for producing fresh water applicable to the present invention.

Fig. 3 is a schematic flowchart showing other mode of apparatus for producing fresh water applicable to the present invention.

Fig. 4 is a schematic flowchart showing other mode of apparatus for producing fresh water applicable to the present invention.

Fig. 5 is a schematic flowchart showing other mode of apparatus for producing fresh water applicable to the present invention.

Fig. 6 is one example of semi-permeable membrane elements applicable to the present invention.

Fig. 7 is a flowchart of the evaluation apparatus of semi-permeable membrane units used in Examples and Comparative Examples.

Fig. 8 is a schematic flowchart of the first semi-permeable membrane unit constituting the evaluation apparatus of semi-permeable membrane elements used in Examples and Comparative Examples.

Fig. 9 is a schematic flowchart of the second semi-permeable membrane unit constituting the evaluation apparatus of semi-permeable membrane elements used in Examples and Comparative Examples.

DESCRIPTION OF NUMBER AND SYMBOL

1: Raw water
2: Pre-treatment device
3: First dosing device of scale inhibitor
4: First dosing device of alkali
5: Pre-treated water tank
6: Dosing device of acid
7: High-pressure pump
8: First semi-permeable membrane unit
9: Feed water of second semi-permeable membrane unit (permeate of first semi-permeable membrane unit, primary permeate)
10: Concentrate of first semi-permeable membrane unit (primary concentrate)
11: Flow volume control valve of concentrate of first semi-permeable membrane unit
12: Second dosing device of scale inhibitor
13: Second dosing device of alkali
14: Booster pump
15: Second semi-permeable membrane unit
16: Permeate of second semi-permeable membrane unit (secondary permeate)
17: Concentrate of second semi-permeable membrane unit (secondary concentrate)
18: Concentrate valve of second semi-permeable membrane unit
19: pH adjustment device
20: Post-treatment device
21: Product water tank
22: Energy recovery device
23: Desalination process
24: Primary permeate bypass valve
25: Feed water
26: Concentrate
27: Permeate
28: Seal
29: Center pipe
30: Semi-permeable membrane
31: Feed water channel material
32: Permeate channel material
33: Recirculation line of concentrate of second semi-permeable membrane unit
34: Recirculation valve of concentrate of second semi-permeable membrane unit
35: Discharge valve of concentrate of second semi-permeable membrane unit
36: Back-pressure valve
37: Primary permeate bypass line
38: Feed water tank

39: Feed water pressure gauge
40: Concentrate pressure gauge
41: First permeate pressure gauge
42: Second feed water pressure gauge
43: Second permeate pressure gauge
44: Second concentrate pressure gauge
45: Pressure adjustment valve
46: Bypass valve
47: Permeate back-pressure valve
48: O-ring
49: Pipe joint
50: Plug
51: Membrane element
52: Pressure vessel

BEST MODE FOR CARRYING OUT THE INVENTION

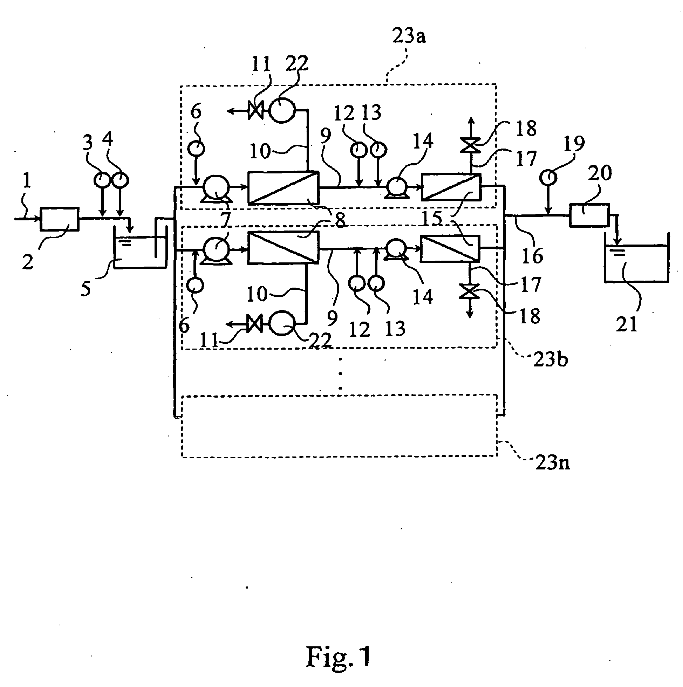

First, the basic flow of the method for producing fresh water according to the present invention will be described in reference to a pattern diagram shown in Fig. 1.

The apparatus for producing fresh water shown in Fig. 1 is basically equipped with a pre-treatment device 2 such as a filter carrying out a pre-treatment to raw water (seawater) 1, a pre-treated water tank 5 storing the pre-treated water as needed, at least a first semi-permeable membrane unit 8 treating the pre-treated water stored in the pre-treated water tank 5, desalination processes 23 (for example, 23a to 23n) having a second semi-permeable membrane unit 15, a pH adjustment device 19 of the permeate of the second semi-permeable membrane, a post-treatment device 20, and a product water tank 21. In the desalination processes 23, a plurality thereof are present as shown in Figs. 23a to 23n, and these are disposed in parallel each other.

At the upstream of the first semi-permeable membrane unit 8 and second semi-permeable membrane unit 15 constituting one desalination process 23, a high-pressure pump 7 and a booster pump 14 used for increasing the pressure of feed water of the respective semi-permeable membrane units are equipped, further, at the upstream of the first semi-permeable membrane unit 8, a dosing device of acid 6 for lowering a pH and at the upstream of the second semi-permeable membrane unit 15, a dosing device of alkali 13 for raising a pH are each equipped. At the concentrate (primary concentrate) 10 side of the first semi-permeable membrane unit 8, an energy recovery device 22 for recovering energy that the primary concentrate 10 has is equipped.

In such apparatus for producing fresh water, seawater 1, in response to its turbidity, as it is, or after pre-treatment is carried out by a pre-treatment device 2, is supplied to the first semi-permeable membrane unit 8 through the high-pressure pump 7. At this time, according to circumstances, to increase boron rejection factor of the first semi-permeable membrane unit 8, a scale inhibitor and alkali are added by a first dosing device of scale inhibitor 3 and a first dosing device of alkali 4.

In the first semi-permeable membrane unit 8, almost all solutes in seawater can be removed, permeate (primary permeate) 9 that solutes were removed of the first semi-permeable membrane unit 8 is sent to a second semi-permeable membrane unit 15. On the other hand, concentrate (primary concentrate) 10 of the first semi-permeable membrane unit 8 is discharged into sea etc. after pressure energy is recovered by an energy recovery device 22. Here, control of permeate flow volume of the first semi-permeable membrane unit 8 can be conducted by adjusting the output of high-pressure pump 7, and also by a flow volume control valve of concentrate 11. Regarding pressure energy recovery, it is generally applied only to a first semi-permeable membrane unit from the point of cost performance, but it may be no problem to recover energy by which an energy recovery device is equipped at concentrate 17 side to a second semi-permeable membrane unit.

Subsequently, according to circumstances, a scale inhibitor is added to the primary permeate 9 by a second dosing device of scale inhibitor 12; after pH thereof is raised higher than a pH of feed water of the first semi-permeable membrane unit 8 using a second dosing device of alkali 13, the pressure is raised by a booster pump 14 and the permeate is supplied to a second semi-permeable membrane unit 15. In the second semi-permeable membrane unit 15, solutes are further removed from feed water, thereby to obtain a secondary permeate 16 with a very high water quality.

Herein, as a place for adding a scale inhibitor to feed water of the second semi-permeable membrane unit 15 using the second dosing device of scale inhibitor 12, it is preferably at an upstream from a second dosing device of alkali 13 to prevent deposition of scale in the vicinity of an alkali-adding port of a second dosing device of alkali 13.

Additionally, according to need, it is preferable that a mixing tank and an in-line mixer are equipped to promote mixing at the downstream side of dosing of scale inhibitor and alkali.

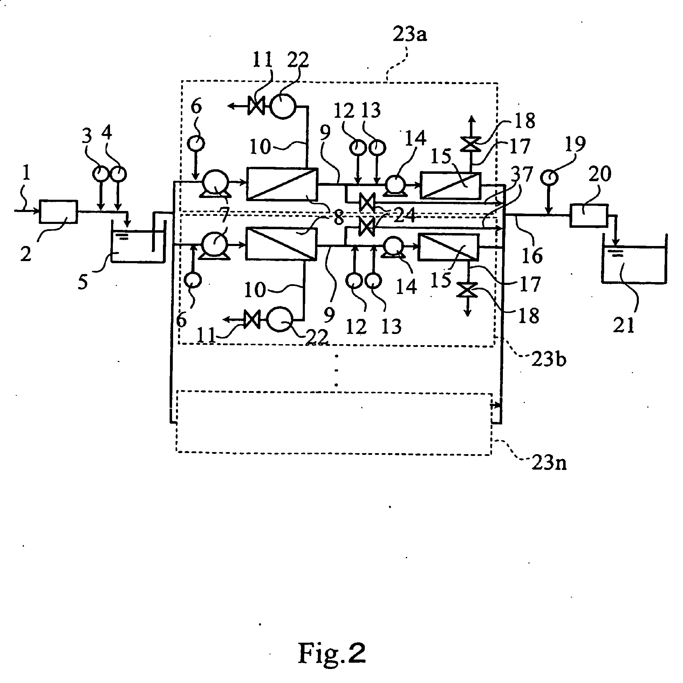

In the case where water quality of primary permeate 9 is good, as exemplified in Fig. 2, a primary permeate bypass line 37 is equipped, and by opening a primary permeate bypass valve 24, only part of the primary permeate 9 can also be treated with the second semi-permeable membrane unit 15. Here, Fig. 2 is the same mode as in Fig. 1 except that a primary permeate bypass line 37 and a primary permeate bypass valve 24 are equipped.

The secondary permeate 16 is alone or mixed with the primary permeate, then, the pH is lowered by a pH adjustment device 19; after a component adjustment such as dosing of lime is conducted by a post-treatment device 20 to adjust components, it is stored in a product water tank 21.

On the other hand, the concentrate (secondary concentrate) 17 of the second semi-permeable membrane unit 15 is discharge into sea etc. In the second semi-permeable membrane unit, since the primary permeate 9 is used as feed water (water to be treated) of the second semi-permeable membrane unit 15, alkali and a scale inhibitor are added to the feed water as needed, suspended solids and the like are sufficiently removed being clear; however, there are many cases that pH becomes high due to dosing of alkali. Therefore, when the secondary concentrate 17 is discharged, it is preferable to be discharged after pH adjustment according to situations. In such case, in the present invention, since concentrate of lines carrying out acid washing is acidic, dosing of acid necessary for pH adjustment is preferably reduced by mixing concentrates discharged from each desalination process and flow them out.

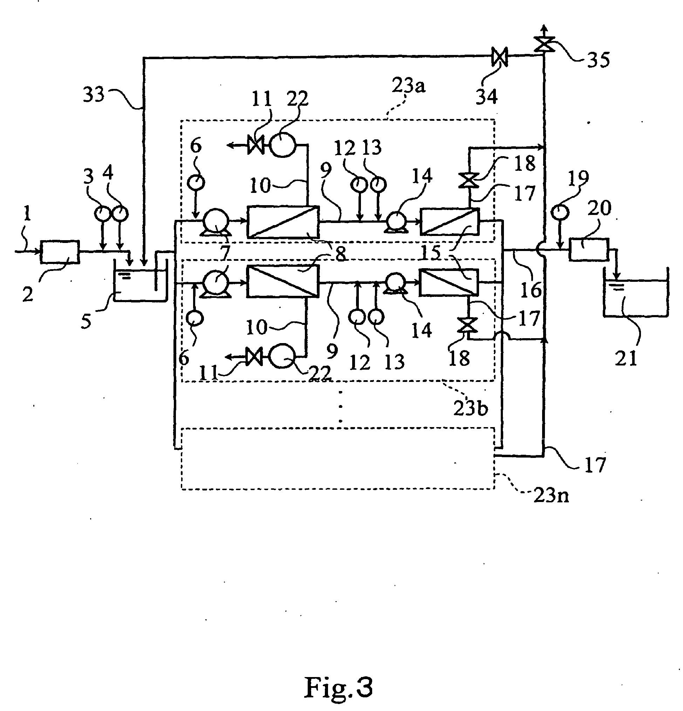

Further, in the present invention, as shown in Fig. 3, at least part of concentrate (secondary concentrate) 17 of the second semi-permeable membrane unit 15 can also be recirculated as feed water of the first semi-permeable membrane unit 8. Doing recirculation or not is not particularly restricted, and it can be suitably determined from water quality of concentrate (secondary concentrate) 17 of the second semi-permeable membrane unit 15, etc. Here, Fig. 3 is the same mode as in Fig. 1 except that at least part of concentrate (secondary concentrate) 17 of the second semi-permeable membrane unit 15 is recirculated as feed water of the first semi-permeable membrane unit 8.

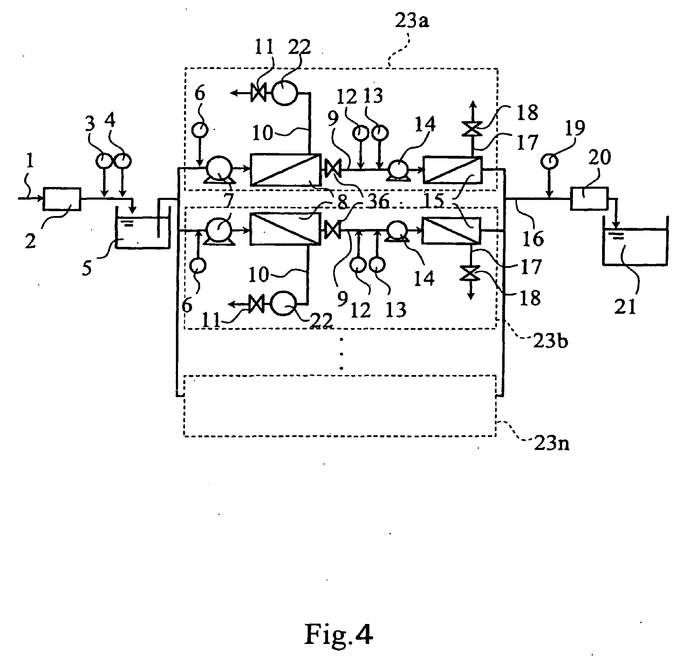

As shown in Fig. 4, a back-pressure valve 36 is equipped at the permeate 9 side of the first semi-permeable membrane unit 8, and a pressure operating to the first semi-permeable membrane unit 8 may be adjusted by the back-pressure valve 36. By so doing, the output of high-pressure pump 7 is not required to change, thus energy that concentrate has will become high, more energy can be recovered by an energy recovery device 22. Here, being not shown in the figure, a back-pressure valve is equipped also at the permeate side of the second semi-permeable membrane unit 15, and may be done similarly. Fig. 4 is the same mode as in Fig. 1 except that a back-pressure valve 36 is equipped at the permeate 9 side of the first semi-permeable membrane unit 8.

Here, in the present invention, while a process for producing fresh water have a plurality of desalination processes 23 in parallel treating permeate of a first semi-permeable membrane unit 8 of which a pH is raised with a second semi-permeable membrane unit 15, temporarily, the pH of raw water or pre-treated water for part of desalination processes (for example, 23a) is lowered and supplied to the first semi-permeable membrane unit 8. Thereby, it becomes possible to desalinate continuously while carrying out acid washing of the part of desalination processes (for example, 23a). When the process of this acid washing is conducted sequentially with a suitable delay in the whole desalination processes, it becomes possible to carrying out acid washing of the whole desalination processes while producing fresh water.

In the present invention, while treating by a second semi-permeable membrane unit 15 through raising a pH of permeate of a first semi-permeable membrane unit 8, a pH of permeate of the first semi-permeable membrane unit 8 in the part of processes carrying out acid washing (for example, 23a) is made lower than that of feed water of a second semi-permeable membrane unit 15 in other desalination processes not carrying out acid washing (for example, 23b to 23n), the permeate is supplied to the second semi-permeable membrane unit 15, and also the permeate obtained from the second semi-permeable membrane unit 15 is mixed with the permeates obtained from the second semi-permeable membrane unit 15 in other desalination processes not carrying out acid washing (for example, 23b to 23n). Namely, the acid input for washing in the part of desalination processes (for example, 23a) is used to neutralize the alkali input for removal of boron in other desalination processes (for example, 23b to 23n). Therefore, an acid input for washing in the part of desalination processes (for example, 23a) and an alkali input for removal of boron in other desalination processes (for example, 23b to 23n) are not needed to do be neutralized each independently, so it is efficient because the absolute amount of acid and alkali for a pH adjustment can be greatly reduced.

Hereinafter, regarding a specific flow in washing, the case where washing of desalination process 23a is conducted in Fig. 1 will be explained as an example. In a desalination process 23a (part of desalination process A), a dosing device of acid 6 is first operated, and microbe contamination of the first semi-permeable membrane unit 8 is prevented by lowering a pH of feed water of the first semi-permeable membrane unit 8 (first semi-permeable membrane unit A1). During that, an ordinary operation is carried out without operating the dosing device of acid 6 in the residual desalination processes 23b to 23n (other desalination process B). In the desalination process 23a, after feed water of the first semi-permeable membrane unit 8 (first semi-permeable membrane unit A1) is set to a low pH for a predetermined time and a microbe contamination-preventing treatment is conducted, the dosing device of acid 6 is stopped, and returns to the same operation conditions as in other desalination processes 23b to 23n (other desalination process B) that the ordinary operation has been carried out so far. Here, for washing the whole desalination processes, a desalination process among the other desalination processes that have been operated under the stop of dosing device of acid 6 is selected (for example, 23b) next to be subjected to acid washing, acid washing is conducted in the desalination process to prevent microbe contamination. Conducting a low pH operation of the first semi-permeable membrane unit 8 is repeated in series, and it is possible to prevent microbe contamination in the whole desalination processes.

Here, the pH of permeate 9 of the first semi-permeable membrane unit 8 (first semi-permeable membrane unit A1) in the desalination process 23a that acid is being added to raw water is lower than usual. However, in the present invention, when the permeate 9 of the first semi-permeable membrane unit 8 (first semi-permeable membrane unit A1) of which pH became lower than usual is supplied to a second semi-permeable membrane unit 15 (second semi-permeable membrane unit A2), no alkali is added. Namely, in the desalination process 23a carrying out acid washing, the operation of the second dosing device of alkali 13 is stopped. However in the present invention, permeate 16 of the second semi-permeable membrane unit (second semi-permeable membrane unit A2) in the desalination process 23a carrying out acid washing and permeate 16 of a second semi-permeable membrane unit (second semi-permeable membrane unit B2) in other desalination processes 23b to 23n (other desalination process B) carrying out alkali dosing before being supplied to the second semi-permeable membrane unit 15 are mixed; thereafter, according to need, which is adjusted by a pH adjustment device 19 to a pH suitable for product water. As the result, the amount of acid and alkali needed by pH adjustment device 19 can be decreased remarkably.

Additionally, it is preferable not to conduct pH adjustment by the pH adjustment device 19 as much as possible. Namely, pH fluctuation in post-treatment is taken into consideration, a pH of a mixed water of permeate 16 of the second semi-permeable membrane unit (second semi-permeable membrane unit A2) in the desalination process 23a (part of desalination A) carrying out acid washing and permeate 16 of the second semi-permeable membrane unit (second semi-permeable membrane unit B2) in other desalination processes 23b to 23n (other desalination process B) not carrying out acid washing is preferably set to a target value. Specifically, in the case where a pH rises when a mineral is added in post-treatment, it is preferable that the pH of the mixed water is set to be low by just that much. For example, this can be carried out by adjustment of the total number of desalination processes disposed in parallel, and the amount of acid added (namely, pH adjustment of feed water of the first semi-permeable membrane unit 8, pH adjustment (adjustment of alkali dosing) of feed water of the second semi-permeable membrane unit 15 in an ordinary operation) and like.

Feed water of the second semi-permeable membrane unit 15 (second semi-permeable membrane unit A2) in the desalination process carrying out acid washing (part of desalination process A) is not added with alkali, thus boron rejection factor deteriorates compared to an ordinary operation that alkali is added. Therefore, to make the influence as low as possible, it is preferable for the number (a) of the desalination processes and an operating time (b) for lowering a pH of feed water of the first semi-permeable membrane unit to satisfy the following:

$$20 \leq a{\times}b \leq 30, \quad a \geq 12$$

Additionally, the influence on the quality of product water due to inferior boron rejection performance in the desalination process carrying out acid washing (part of desalination process A), in other words the process that alkali is not added to feed water of the second semi-permeable membrane unit, generally does not often pose a problem because the number of processes carrying out acid washing is few compared to that of the whole desalination processes. However, in the case where it needs to compensate the lowering of the quality of product water during acid washing, the boron rejection factor is increased by increasing the amount of alkali added in an ordinary operation process (other desalination process B) that alkali is added, and by mixing with permeate during carrying out acid shock, it is possible to obtain product water with the same boron concentration as the case not carrying out acid washing.

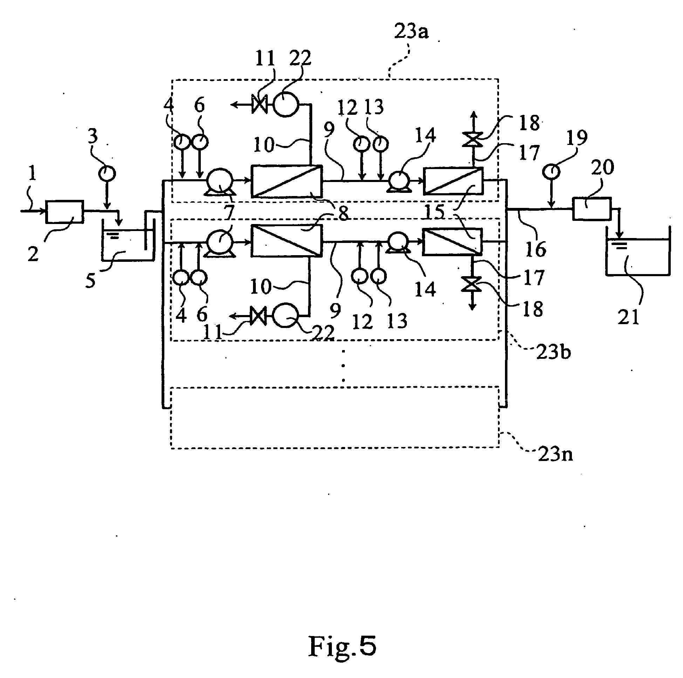

Meanwhile, as described above, at the upstream of the first semi-permeable membrane unit 8, according to need, there are provided a first dosing device of scale inhibitor 3 that add a scale inhibitor to raw water of the first semi-permeable membrane unit 8 and a first dosing device of alkali 4 that add an alkali to raise a pH of raw water of the first semi-permeable membrane unit 8. Also according to,need, at the upstream of the second semi-permeable membrane unit 15, there is provided a second dosing device of scale inhibitor 12 that add a scale inhibitor to feed water of the second semi-permeable membrane unit 15 (primary permeate 9). The first dosing device of alkali 4 is not essential for carrying out the present invention; but for example, when alkali is added to only the second semi-permeable membrane unit 15 for removing boron, in particular, scale tends to precipitate. Therefore, when alkali is added to raw water of the second semi-permeable membrane unit 15 while alkali is added to raw water of the first semi-permeable membrane unit 8, there is an effect that a pH of the second semi-permeable membrane unit 15 can be suppressed relatively low. However, regarding dosing of alkali to the first semi-permeable membrane unit 8, the dosing amount increases because flow volume is large depending on places, which is demerit in cost. Further, in the present invention, acid is added to feed water of part of the first semi-permeable membrane unit 8 by the dosing device of acid 6; and so when alkali is added before that, acid required increases by just that much. Then, in the present invention, there is preferably adopted a method where no alkali is added to feed water of the first semi-permeable membrane unit 8, or as exemplified in Fig. 5, a dosing device of alkali 4 is provided separately in each desalination process, the dosing device of alkali 4 is stopped in a desalination process where acid is added to feed water of the first semi-permeable membrane unit, and the dosing device of alkali 4 is operated in other desalination process carrying out ordinary operation. Here, Fig. 5 is the same mode of as in Fig. 1 except that a dosing device of alkali 4 is provided separately in each desalination process.

In the present invention, as a method for lowering a pH of feed water of the first semi-permeable membrane unit 8, a method of dosing to a feed water line by a chemical dosing pump is a general one. In the process of the present invention, since mixing is conducted by a high-pressure pump, it is thought that no problem arises in mixing basically. However, it is possible to facilitate mixing by equipping a line mixer at a point after dosing or by equipping a mixing tank at a point of dosing. A method for lowering a pH is not particularly limited, but sulfuric acid is most preferably used from intensity of acid and easy handling. When seawater is used as raw water, it is preferable to set a pH of feed water of the first semi-permeable membrane unit 8 to be 4 or less capable of killing most fungi. The pH of permeate 9 of the first semi-permeable membrane unit 8 tends to be higher by about 1 than a pH of feed water in an acidic region. Also, as described below, in a desalination process where an ordinary operation is conducted without acid washing (other desalination process B), it is preferable to set a pH of feed water of the second semi-permeable membrane unit 15 to be 8 or more for improving boron rejection performance, 9 or more for obtaining further high effects. From considering these, it is preferable to set a pH of feed water of the first semi-permeable membrane unit 8 to be 4 or less based on the intention of the present invention that sequences of alkali dosing are neutralized by sequences of acid dosing.

Operation for lowering a pH is preferably 0.5 hours or more, 2.5 hours or less per day in one desalination process because it can suppress proliferation of microbes efficiently. When it is 0.5 hours or more, proliferation of microbes can be sufficiently suppressed, whereas when more than 2.5 hours, the proliferation suppressing effect reaches the limit. Therefore, when it is set to 2.5 hours or less, proliferation of microbes is prevented while preventing the lowering of quality of product water, and chemical costs for acid dosing can also be suppressed.

On the other hand, as a pH of feed water of the second semi-permeable membrane unit 15 in the desalination process where acid washing is not conducted (other desalination process B), it is preferably set to 8 or more for improving born rejection performance. To exhibit this effect further sufficiently, it is preferably set to 9 or more. Thereby it is possible to improve a rejection factor of a reverse osmosis membrane by ionizing boron that is not generally dissociated in seawater.

Operation for lowering a pH easily makes the water quality of product water stable over time by always conducting in the desalination processes which is changed sequentially, but an ordinary operation supplying raw water or pre-treated water to the first semi-permeable membrane unit 8 as it is without lowering the pH in all desalination processes may be carried out temporarily.

In the case of carrying out an ordinary operation that raw water or pre-treated water is supplied to the first semi-permeable membrane unit 8 as it is without lowering the pH in all desalination processes temporarily, during which acid washing is carried out in part of desalination processes (desalination process A), it is preferable to set for a pH of feed water of the second semi-permeable membrane unit 15 in the desalination process that acid washing is not conducted (other desalination process B) to be higher than a pH of feed water of the second semi-permeable membrane unit 15 in the ordinary operation (other desalination process B2). By so doing, it is possible to make boron concentration of the permeate obtained from the desalination process that acid washing is not conducted (other desalination process B) low; and by mixing the permeate having a high boron concentration obtained from the desalination processes carrying out acid washing (desalination process A) with the permeate having a low boron concentration, it is possible to maintain the boron concentration without deteriorating the boron concentration of permeate after mixing. In this time, a desalination process for raising a pH of feed water of the second semi-permeable membrane unit 15 may be the whole of desalination processes that acid washing is not carried out, or may be part thereof.

As exemplified in Fig. 2, in the case where an operation that only part of permeate 9 of the first semi-permeable membrane unit 8 is treated by the second semi-permeable membrane unit 15 is conducted, needless to say, maintenance of water quality is carried out by the above-described pH adjustment, but similar effects can be obtained by adjusting flow volume of bypass line 37. Namely, in the case where raw water or pre-treated water is supplied to the first semi-permeable membrane unit 8 as it is without lowering the pH in all desalination processes temporarily, during which acid washing is conducted in part of desalination processes (desalination process A), water volume of feed water of the second semi-permeable membrane unit in any one of desalination processes (residual permeate b) is made larger than that of feed water in an ordinary operation of the second semi-permeable membrane unit (namely, flow volume of bypass is reduced, or no bypassing). Thereby boron concentration can also be kept constant, which is a preferable control method. In this case, as the desalination process for adjusting flow volume of bypass, it may a desalination process carrying out acid washing, a desalination process in an ordinary operation, or both desalination processes. Further, for example, it may be part of desalination process among desalination processes in an ordinary operation, or part of desalination process among desalination processes carrying out acid washing. Additionally, as exemplified in Fig. 2, in the case where an operation that only part of permeate 9 of the first semi-permeable membrane unit 8 is treated by the second semi-permeable membrane unit 15 is conducted, needless to say, maintenance of water quality is carried out by both the above-described pH adjustment and flow volume adjustment.

As alkali added in a first dosing device of alkali 4 and a second dosing device of alkali 13, sodium hydroxide, calcium hydroxide, potassium hydroxide, sodium bicarbonate, ammonium hydroxide and the like can be exemplified, which is not particularly restricted. However, to prevent an increase in scale component into seawater, it is better not to use calcium or magnesium. The acceptable range of alkali dosing herein is suitably set depending on the alkali resistance of semi-permeable membrane or an acceptable range till the generation of scale by adding alkali.

Additionally, being not shown in the figure, it is preferable that an in-line mixer is equipped right after the first dosing device of alkali 4 and the second dosing device of alkali 13, or a dosing port of alkali is directly contacted to the flow of seawater, thereby to prevent precipitation of scale at the dosing port. As a matter of course, it is also preferable to add a scale inhibitor to seawater before adding alkali as described above. The amount (concentration) of scale inhibitor added in the first semi-permeable membrane unit 8 and the second semi-permeable membrane unit 15 is generally determined by a condition where feed water of the semi-permeable membrane unit that scale most easily precipitates is most concentrated, namely, salt concentration, composition, temperature, pH, etc. in concentrate.

As a scale inhibitor added from a first dosing device of scale inhibitor 3 and a second dosing device of scale inhibitor 12, it may be the one that forms a complex with a metal, a metal ion or the like in solution to solubilize the metal or metal salt, and organic or inorganic ionic polymers or monomers can be used. As the organic ionic polymer, there can be used synthetic polymers such as polyacrylic acid, sulfonated polystyrene, polyacrylamide and polyarylamine, natural polymers such as carboxymethyl cellulose, chitosan and alginic acid; and as monomers, ethylenediaminetetraacetate (EDTA) and the like. As the inorganic scale inhibitor, polyphosphate and the like can be used.

Among these scale inhibitors, polyphosphate and ethylenediaminetetraacetate are preferably used from the points of easy availability and easy handling such as solubility and price. Polyphosphate, being typified by sodium hexametaphosphate, is a polymerized inorganic phosphoric acid type substance that has two or more phosphor atoms in a molecule, an alkali metal and an alkaline metal are bonded with atoms of phosphoric acid, etc. As a typical polyphosphate, sodium tetrapyrophoshate, sodium dipyrophosphate, sodium tripolyphosphate, sodium tetrapolyphosphate, sodium heptapolyphosphate, sodium decapolyphosphate, sodium metaphosphate, sodium hexametaphosphate, and their potassium salts.

In the present invention, quality of feed water supplied to the first semi-permeable membrane unit 8 is preferably clean and has few deposition of fouling on a semi-permeable membrane. For this, first, water quality at an intake point is preferably good. When surface water is contaminated, percolating water such as groundwater is preferably used as raw water. Depending on water quality of raw water, it is preferable to conduct pre-treatment of raw water such as removal of suspended solid components and sterilization. By these treatments, it is possible to prevent the lowering of performance in the first semi-permeable membrane unit 8 and the second semi-permeable membrane unit 15, further subsequent processes, and to carry out a stable operation for a long period of time in treatment apparatus. A specific treatment may be suitably selected on the basis of a state of raw water such as seawater.

In the case where suspended solids need to be removed from raw water, applications of sand filtration, microfiltration membrane and ultrafiltration membrane are effective. In this case, when there are lots of microbes such as bacteria and fungi, disinfectant is preferably added. It is preferable to use chlorine to sterilize; for example, chlorine gas or sodium hypochlorite may be added to raw water in a range of 1 to 5 mg/l as free chlorine. In this case, there is a case that a specific disinfectant has no chemical durability depending on semi-permeable membranes; in such case, it is added preferably at an upstream side in the flow direction of feed water as possible, further it is preferable to invalidate the disinfectant in the vicinity at the inlet of raw water of the first semi-permeable membrane unit 8. For example, in sterilizing with free chlorine, the sterilization effect is exhibited by its oxidizing power. However, since it is known that free chlorine also oxidatively decomposes polymer substances constituting a semi-permeable membrane, it is preferable to invalidate the residual free chlorine not contributing to sterilization with a reducing agent (namely markedly weakening oxidizing power). Specifically, the concentration of free chlorine is measured, based on this measurement, the dosing amount of chlorine gas or sodium hypochlorite may be controlled, or a reducing agent such as sodium hydrogen sulfate may be added.

In the case where bacteria, proteins, natural organic components and the like are contained other than suspended solids, it is also effective to add an aggregating agent such as aluminum polychloride, aluminum sulfate and iron (III) chloride. The aggregated feed water is thereafter precipitated on a tilt board etc., followed by sand filtration or filtration by microfiltration membrane and ultrafiltration membrane that a plurality of hollow fiber membranes were bundled, thereby to be able to obtain feed water suitable for passing through a semi-permeable membrane in subsequent steps. In particular, in adding an aggregating agent, it is preferable to adjust pH for easy aggregation, generally; the pH is 5 or more, less than 8, and preferably less than 7.

Additionally, when pH is lowered in adding an aggregating agent, regarding a desalination process not carrying out acid washing (other desalination process B), boron rejection factor is lowered when pH is not raised before the first semi-permeable membrane unit 8; and so alkali is preferably added before the first semi-permeable membrane unit 8 for raising pH. In this manner, as a solute that varies the rejection performance by a pH change in the semi-permeable membrane unit, there is listed the one such as carbonic acid, nitric acid and silica whose dissociation degree changes by pH. By raising pH for these solutes, there rises the rejection ratio [%] (= $100 \times$ (1-permeate concentration)/feed water concentration). Hence, to maintain the permeate concentration below a target concentration such as standard of water quality, alkali is preferably added as needed.

On the other hand, in the case where a lot of organic substances soluble in seawater are contained, the organic substances can be decomposed by adding chlorine gas or sodium hypochlorite, and they can also be removed by dissolved air floatation or activated carbon filtration. In the case where a lot of soluble inorganic substances are contained, a chelating agent such as organic polymer electrolyte and sodium hexametaphosphate may be added, or they may be exchanged with soluble ions using an ion exchange resin. When iron and manganese are present in a soluble state, it is preferable to use aeration oxidation filtration, contact oxidation filtration and the like.

Meantime, as raw water in the present invention, it is not particularly limited, including seawater, brine, river water, groundwater, drainage and their treated water. However, a two-step method for raising pH by adding alkali in the second step is in great need for removing high-concentration salts highly or removing boron highly. Therefore, water containing high-concentration salts such as seawater or treated water of seawater is preferably used as raw water in the present invention as well. Additionally, it is often said that seawater generally has the total salt concentration of 3% or more by weight, but there are cases that it is easily mixed with fresh water near the river mouth, and it becomes 4% or more by weight in seawater in the Middle East or an accumulated seawater, so it is not limited by the total salt concentration.

The high-pressure pump 4 is not particularly limited, and it can be suitably chosen depending on a necessary output. However, in the present invention, it is necessary to give feed water a pressure more than osmotic pressure; thus, in the case of seawater, it is preferably the one capable of providing a pressure of 3 MPa or more, further preferably 5 MPa or more. On the other hand, when a pressure markedly higher than osmotic pressure of raw water 1 to be supplied is given, it is not preferable because permeation flux at the inlet part of a first semi-permeable membrane becomes too large, and organic substances infinitesimally present in raw water precipitate and attach on the membrane surface, deteriorating membrane performances. Therefore, it is preferable to provide a pressure such that a differential permeation flux in the inlet part becomes $1\ m^3/m^2 \cdot day$ or less, preferably $0.5\ m^3/m^2 \cdot day$ or less. Additionally, the differential permeation flux can be obtained on the basis of the calculation formula described below.

Booster pump 14 is not particularly limited. Since it aims at supplying permeate of a first semi-permeable membrane and osmotic pressure hardly needs to be considered, it may be a low pressure and low flow volume compared to the high-pressure pump 7. As a specific pressure, it is preferably one capable of loading a maximum pressure of 2 MPa.

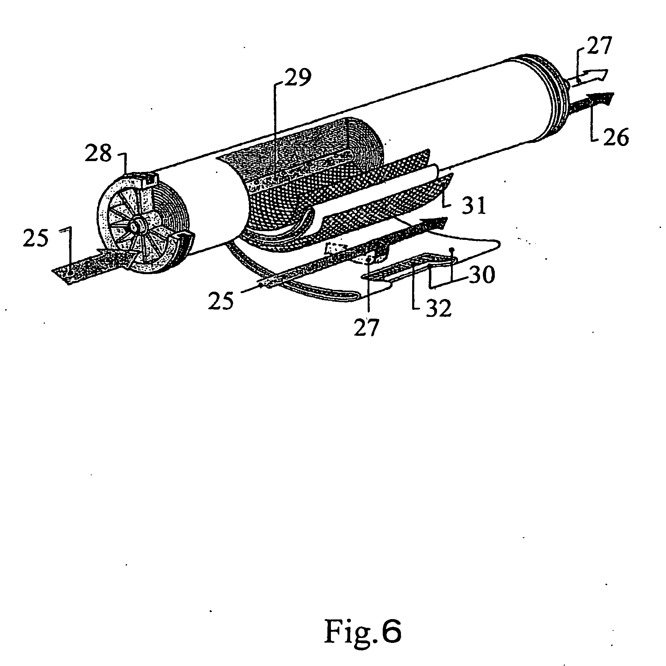

As a first semi-permeable membrane unit 8 and a second semi-permeable membrane unit 15, a fluid separation device (element) that a hollow fiber membrane or a flat sheet membrane is accommodated in a casing for easy handling can be used. In the case where this element is formed by a flat sheet membrane, as shown in Fig. 6 for example, it is a preferable structure that a membrane unit containing a semi-permeable membrane 30, a permeate channel material 32 such as tricot, and a feed water channel material 31 such as plastic net is wound several times around a cylindrical center pipe 29 that many holes were bored, and these are accommodated in a cylindrical casing. It is also preferable membrane module that a plurality of elements are connected in series or parallel. In this element, feed water 25 is supplied into the unit from one end, and until it reaches the other end, permeate 27 permeated through a semi-permeable membrane 30 is flowed into the center pipe 29, which is taken out from the center pipe 29 at the other end. On the other hand, feed water 25 not permeated through the semi-permeable membrane 30 is taken out as concentrate 26 at the other end.

As a material for the semi-permeable membrane 30, there can be used polymer materials such as cellulose acetate type polymer, polyamide, polyester, polyimide and vinyl polymer. The membrane structure may be either an asymmetric membrane having a dense layer on at least one surface of the membrane, and micro-pores with gradually larger pore diameter toward the inside of the membrane or the other surface from the dense layer, or a composite membrane having a very thin functional layer formed by a different material on the dense layer of asymmetric membrane.

However, above all, a composite membrane composed of a functional layer made of polyamide having high pressure resistance and high permeability as well as a high solute rejection performance and an excellent potential is preferable. In particular, when seawater is used as raw water, it is necessary to load a pressure higher than the osmotic pressure in the first semi-permeable membrane unit, and substantially an operation pressure of at least 5 MPa is often loaded. For maintaining high permeability and rejection performance against this pressure, suitable is a structure that polyamide is used as a functional layer, which is held by a support consisting of a porous membrane and unwoven cloth. As the polyamide semi-permeable membrane, it is suitably a composite semi-permeable membrane having a functional layer of crosslinked polyamide obtained by a polycondensation reaction of a multifunctional amine with a multifunctional acid halide as a support.

The functional layer is preferably the one which is made of crosslinked polyamide with a high chemical stability to acid or alkali, or consisting mainly of crosslinked polyamide. The crosslinked polyamide is formed by polycondensation of a multifunctional amine and a multifunctional acid halide, and it is preferable to contain a compound having a trifunctional group or more in at least one of the multifunctional amine and multifunctional acid halide components

Herein, a multifunctional amine means an amine having at least two primary and/or secondary amino groups in a molecule; for example, there can be listed aromatic multifunctional amines that two amino groups are bonded with benzene at any one of ortho, meta and para positional relations, such as phenylenediamine, xylenediamine; 1,3,5-triaminobenzene, 1,2,4-triaminobenzene and 3,5-diaminobenzoic acid; aliphatic amines such as ethylenediamine and propylenediamine; alicyclic multifunctional amines such as 1,2-diaminocyclohexane, 1,4-diaminocyclohexane, piperazine, 1,3-bispiperidylpropane and 4-aminomethylpiperazine, and the like. Above all, taking selective isolation, permeability of membrane and heat resistance into accounts, aromatic multifunctional amines are preferable, and as such aromatic multifunctional amines, m-phenylenediamine, p-phenylnediamine and 1,3,5-triaminobenze are preferably used. Further, from easy availability and easy handling, m-phenylenediamine (hereinafter denoted as m-PDA) is more preferably used. These multifunctional amines may be used alone or in a mixture thereof.

A multifunctional acid halide is an acid halide having at least two carbonyl halide groups in a molecule. For example, as a trifunctional halide, there can be listed trimesic acid chloride, 1,3,5-cyclohexane tricarboxylic acid chloride, 1,2,4-cyclobutane tricarboxylic acid chloride, and the like; as a difunctional halide, there can be listed aromatic difunctional acid halides such as biphenyldicarboxylic acid chloride, biphenylne carboxylic acid chloride, azobenzene dicarboxylic acid chloride, terephthalic acid chloride, isophthalic acid chloride and naphthalene dicarboxylic acid chloride; aliphatic difunctional acid halides such as adipoyl chloride and sebacoyl chloride; and alicyclic difunctional acid chlorides such as cyclopentane dicarboxylic acid dichloride, cyclohexane dicarboxylic acid dichloride, and tetrahydrofuran dicarboxylic acid dichloride. Taking reactivity with multifunctional amines into accounts, multifunctional acid halides are preferably multifunctional acid chlorides, and taking selective isolation of membrane and heat resistance into accounts, multifunctional aromatic acid chlorides are preferable. Above all, from the viewpoints of easy availability and easy handling, trimesic acid chloride is more preferably used. These multifunctional acid halides may be used alone or in a mixture thereof.

In the present invention, a semi-permeable membrane used in the first semi-permeable membrane unit 8 can desirably remove solutes such as ions and others in seawater highly. Particularly, in regard to boron whose rejection factor is low compared with other components, it is preferable to have a high boron rejection performance. Specifically, as a semi-permeable membrane used in the first semi-permeable membrane unit 8, fresh water with high quality of water can be obtained from seawater by adopting the one capable of exhibiting such performance that pure water permeability coefficient $L_p$, is $3 \times 10^{-12}$ m³/m²·Pa·s or more and boron permeability coefficient $P_b$ is $400 \times 10^{-9}$ m/s or less when an artificial seawater having the total salt concentration of 3.5% by weight, pH of 7.0 and temperature of 25°C is supplied by an operation pressure of 5.5 MPa.

Herein, artificial seawater having the total salt concentration of 3.5% by weight is the one prepared in a composition: NaCl=23.926 g/l, $Na_2SO_4$=4.006 g/l, KCl=0.738 g/l, $NaHCO_3$=0.196 g/l, $MgCl_2$=5.072 g/l, $CaCl_2$=1.147 g/l, and $H_3BO_3$=0.0286 g/l.

The pure water permeability coefficient $L_p$ and boron permeability coefficient $P_b$ can be obtained by the following method taking into consideration a concentration polarization phenomenon occurring on the membrane surface. For example, when measured using a flat membrane, by means of a flat membrane cell shown in a document by M. Taniguchi et al. (Journal of Membrane Science, vol. No.183, p259-267, 2000 (hereinafter referred to Reference 1)), permeation flux $J_v$ and TDS permeate concentration $C_p$ of artificial seawater are measured, and $L_p$, $P_b$ are calculated by the following formula.

$$J_v = L_p (\Delta P - \Delta \pi)$$

$$L_s = P (C_m - C_p)$$

$$J_{sb} = P_b (C_{mb} - C_{pb})$$

$$\Delta \pi = \pi (C_m) - \pi (C_p)$$

$$(C_m - C_p) / (C_f - C_p) = \exp (J_v / k)$$

$$(C_{mb} - C_p) / (C_{fb} - C_{pb}) = \exp (J_v / k_b)$$

$J_v$: Pure water permeation flux [m$^3$/m$^2$·s]

$J_s$: TDS (Total Dissolved Solids = total salt content) permeation flux [kg/m$^2$·s]

$J_{sb}$: Boron permeation flux [kg/m$^2$·s]

Lp: Pure water permeability coefficient [m$^3$/m$^2$·Pa·s]

P: TDS permeability coefficient [m/s]

$P_b$: Boron permeability coefficient [m/s]

$\pi$( ): Osmotic pressure [Pa]

$\Delta\pi$: Osmotic pressure difference [Pa]

$\Delta$P: Operation pressure difference [Pa]

$C_m$: TDS raw water membrane surface concentration [kg/m$^3$]

$C_f$: TDS raw water bulk (inside channel) concentration [kg/m$^3$]

$C_p$: TDS permeate concentration [kg/m$^3$]

$C_{mb}$: Boron raw water membrane surface concentration [kg/m$^3$]

$C_{fb}$: Boron raw water bulk concentration [kg/m$^3$]

$C_{pb}$: Boron permeate concentration [kg/m$^3$]

k: TDS mass-transfer coefficient [m/s]

$K_b$: Boron mass-transfer coefficient [m/s]

Here, osmotic pressure $\pi$( ) can be known by a so-called "Miyake's formula" shown in a document by M. Taniguchi et al. (AIChE Journal, vol. No. 46, p1967-1973, 2000 (hereinafter referred to Reference 2)). TDS mass-transfer coefficient k is a value determined by an evaluation cell, but can be obtained by an osmotic method or flow velocity variation method shown in Reference 2 as a function of membrane surface Q [m$^3$/s] or membrane flow rate u [m/s].

In the case of flat membrane cell shown in Reference 1,

$$k=1.63 \times 10^{-3} \cdot Q^{0.4053}$$

Subsequently, boron mass-transfer coefficient $k_b$ can be calculated as shown in the same document.

$$k/k_b=(D/D_b)^{0.75}$$

D: TDS diffusion coefficient [m$^2$/s]

$D_b$: Boron diffusion coefficient [m$^2$/s]

Hence, unknown quantities $L_p$, P, $P_b$, $C_m$ and $C_{mb}$ can be calculated from the above formulas. In the case of a membrane element, as shown in Reference 2, $L_p$ and P can be calculated by fitting while integrating in the longitudinal direction of the membrane element.

The foregoing differential permeation flux is also explained. First, "differential" means a specific position in the longitudinal direction of this membrane element; by fitting in the above-described integration calculation, it can be precisely obtained by the profile in the longitudinal direction of this membrane element finally obtained. Here, in the case where a semi-permeable membrane having a sufficient rejection factor of 99% or more in salt rejection performance is used, TDS permeate concentration $C_p$ is very small compared with TDS raw water bulk concentration $C_f$, and osmotic pressure $\pi$ ($C_p$) can be neglected; thus, it can be calculated in the following manner.

Namely, the differential permeation flux $J_{v, IN}$ can be obtained by solving a simultaneous equation of $J_{v, IN}$ and $C_{m, IN}$ using:

$$J_{v,IN}=L_p(\Delta P_{IN}-\Delta\pi_{IN})$$

$$J_{s,IN}=P(C_{m,IN})$$

$$\Delta\pi\approx\pi(C_m)$$

$$C_{m,IN}/C_{f,IN}=\exp(J_{v,IN}/k)$$

To obtain a composite semi-permeable membrane suitable for the first semi-permeable membrane unit 8 having such a high boron rejection performance, for example, a method that an aliphatic acyl group is made present inside or on the surface can be mentioned. Specifically, for example, a functional layer substantially having separation performance of ions etc. is provided on the micro-porous support membrane substantially having no separation performance, and an aliphatic acyl group is made present inside the functional layer and/or on the surface of the functional layer. The aliphatic acyl group may be present in the functional layer or on the surface of the functional layer by bonding.

The method making an aliphatic acyl group present in the functional layer is not particularly limited. For example, an aliphatic acid halide solution is contacted with the surface of the functional layer formed by an interfacial polycondensation of a multifunctional amine and a multifunctional acid halide, or an aliphatic acid halide is concomitantly present in an interfacial polycondensation of a multifunctional amine and a multifunctional acid halide, thereby to make the group present in the functional layer through covalent bonding. Namely, in forming a polyamide functional layer on a micro-porous support membrane, a multifunctional amine aqueous solution, an organic solvent solution of an aliphatic acid halide, and an organic solvent solution of an aliphatic acid halide having carbon numbers of 1 to 4 different from this may be contacted on a micro-porous support membrane to be subjected to an interfacial polycondensation; or a multifunctional amine aqueous solution, a multifunctional acid halide, and an organic solvent solution containing an aliphatic acid halide having carbon numbers of 1 to 4 different from this may be contacted on a micro-porous support membrane to be subjected to an interfacial polycondensation.

An aliphatic acid halide preferably has carbon numbers of 1 to 4, and further preferably carbon numbers of 2 to 4. As the carbon number is larger, reactivity of an aliphatic acid halide becomes lower due to steric hindrance, access of a multifunctional acid halide to a reaction point becomes difficult, preventing a smooth membrane formation; thus, the performance of membrane deteriorates. As such aliphatic acid halide, there are listed methanesulfonyl chloride, acetyl chloride, propionyl chloride, butyryl chloride, oxalyl chloride, malonic acid dichloride, succinic acid dichloride, maleic acid dichloride, fumaric acid dichloride, chlorosulfonylacetyl chloride, N,N-dimethylaminocarbonyl chloride and the like. These may be used alone, or in 2 kinds or more at the same time; in order to have a balance that a membrane is made into a dense structure and permeability is not so lowered, it is preferable to consist mainly of oxalyl chloride.

The support containing a micro-porous support membrane is a layer which substantially has no separation performance, and provided to give a mechanical strength to a functional layer of crosslinked polyamide substantially having a separation performance. The one that a micro-porous support membrane is formed on a base material such as cloth or unwoven cloth is used.

The micro-porous support membrane is a layer which substantially has no separation performance, and provided to give a mechanical strength to a functional layer substantially having a separation performance. It has a uniform micro-pore or a gradually larger micro-pore from one surface to the other surface, and it is preferably a support membrane with a structure that the size of the micro-pore is 100 nm or less on the surface of one side.

The above-described support can be selected from various commercial materials such as "Millipore filter VSWP" (product name) manufactured by Millipore Corporation and "Ultrafilter UK10" (product name) manufactured by Toyo Roshi Co., Ltd.; but it can be generally produced in accordance with a method described in "Office of Saline Water Research and Development Progress Report " No. 359 (1968). As the material, there are ordinarily used homopolymers such as polysulfone, polyamide, polyester, cellulose acetate, cellulose nitrate and polyvinylchloride and their blend, but it is preferable to use polysulfone with high chemical, mechanical and thermal stabilities.

For example, a micro-porous support membrane having a micro-pore of several 10 nm or less in diameter on almost all surface is obtained as follows: a dimethylformamide (DMF) solution of the foregoing polysulfone is cast in a constant thickness onto a polyester cloth tightly woven or unwoven cloth, which is subjected to wet coagulation in an aqueous solution containing sodium dodecylsulfate of 0.5% by weight and DMF of 2% by weight. As the material of micro-porous support membrane, polyamide and polyester are also preferably used other than polysulfone.

EXAMPLES

The total dissolved solids concentration (TDS concentration) of permeate or feed water was obtained by measuring electric conductivity of each liquid by an electric conductivity meter (SC82 manufactured by Yokokawa Denki Co., Ltd.) and by the relationship between the concentration and electric conductivity of artificial seawater previously measured with an artificial seawater. pH measurement was measured using PH82 manufactured by Yokokawa Denki Co., Ltd.

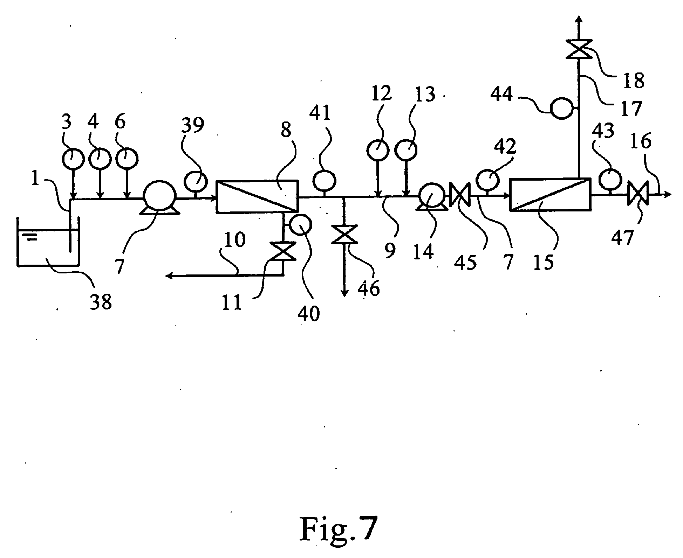

Evaluation apparatus of flow (hereinafter referred to apparatus X) shown in Fig. 7 was constituted. Additionally, number and symbol in Fig. 7 means the same ones described above.

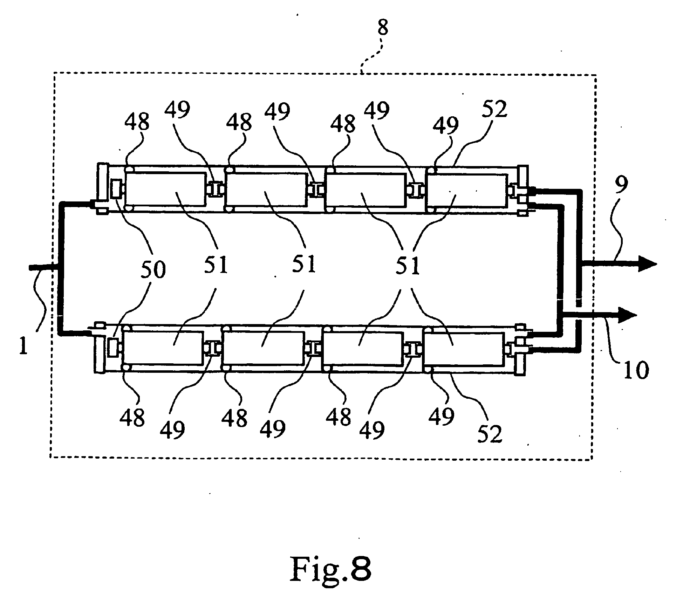

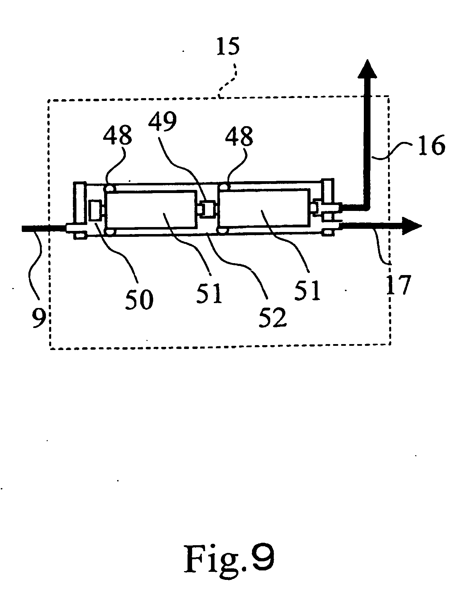

Apparatus X was constituted by a feed water tank 38, high-pressure pump 7, a first semi-permeable membrane unit 8, booster pump 14 and a second semi-permeable membrane unit 15. The high-pressure pump 7 is output-controlled by an inverter, the output of booster pump 14 is non-regulated, but pressure loaded in feed water of the second semi-permeable membrane unit 15 was substantially controlled by a pressure adjustment valve 45. The flow volume of permeate 9 of the first semi-permeable membrane unit 8 was made controllable by a flow control valve 11 of concentrate of first semi-permeable membrane unit 11, and the flow volume of permeate of the second semi-permeable membrane unit was made controllable by a pressure adjustment valve 45, valve 18 and back-pressure valve 47. As shown in Fig. 8, the first semi-permeable membrane unit 8 was constituted in such manner that four membrane elements 51 of 10 cm diameter and 1 m of whole length were jointed in series by a pipe joint 49, the end of one side was sealed with a plug 50 to provide two rows in parallel being loaded in a pressure vessel 52. As shown in Fig. 9, the second semi-permeable membrane unit 15 was constituted in such manner that two membrane elements 51 of 10 cm diameter and 1 m of whole length was similarly jointed in series to produce one row being loaded in the pressure vessel 52.

<Reference example 1>

As an ordinary operation, seawater near an Ehime factory of Toray Industries Inc. was pre-treated by sand filtration to remove suspended solids, and the pre-treated seawater (TDS concentration 3.4% by weight, water temperature 22°C, pH=7.5) was treated by flow volume 80 $m^3$/day using apparatus X. As a membrane element of a first semi-permeable membrane unit, SU-810 manufactured by Toray Industries Inc. was used; as a membrane element of a second semi-permeable membrane unit, SU-710 manufactured by Toray Industries Inc. was used. The operation was done by a recovery factor of 30% in the first semi-permeable membrane unit, and a recovery factor of 75% in the second semi-permeable membrane unit. Additionally, there was no dosing of scale inhibitor by a first dosing device of scale inhibitor 3, no dosing of alkali by a first dosing device of alkali 4, and no dosing of acid by a dosing device of acid 6. However, to improve boron rejection performance in the second semi-permeable membrane unit, NaOH was added by a second dosing device of alkali 13, and a pH of feed water of the second semi-permeable membrane unit 15 was set to 9.0. Further, a scale inhibitor (SHMP, sodium hexametaphosphate) of 3 mg/l was added by a second dosing device of scale inhibitor 12, thereby to prevent the generation of scale due to alkali dosing. As a result of operation under this condition, the permeate flow volume was 18 $m^3$/day, permeate TDS concentration was 1.1 mg/l, boron concentration was 0.19 mg/l, and pH of permeate was 9.2. In this case, the dosing amount of sulfuric acid in the dosing device of acid 6 was 0 g/hr, and the dosing amount of NaOH in the second dosing device of alkali 13 was 25 g/hr.

<Reference example 2>

As a washing operation, the operation was done in the same condition as in Reference example 1 except that sulfuric acid was added by a dosing device of acid 6 before a first semi-permeable membrane unit 8, pH of feed water to the first semi-permeable membrane unit 8 was set to 3.0, there was no dosing of scale inhibitor by a second dosing device of scale inhibitor 12 before a second semi-permeable membrane unit 15, and no dosing of alkali by a second dosing device of alkali 13. As a result, the permeate flow volume was 18 $m^3$/day, permeate TDS concentration was 1.5 mg/l, boron concentration was 0.25 mg/l, and pH of permeate was 4.5. In this case, the dosing amount of sulfuric acid in the dosing device of acid 6 was 530 g/hr, and the dosing amount of NaOH in the second dosing device of alkali was 0 g/day.

<Reference example 3>

As a washing operation, the operation was done in the same condition as in Reference example 1 except that sulfuric acid was added by a dosing device of acid 6 before a first semi-permeable membrane unit 8, pH of feed water to the first semi-permeable membrane unit 8 was set to 3.0. As a result, the permeate flow volume was 18 $m^3$/day, permeate TDS concentration was 1.1 mg/l, boron concentration was 0.19 mg/l, and pH of permeate was 9.2. In this case, the dosing amount of sulfuric acid in the dosing device of acid 6 was 530 g/hr, and the dosing amount of NaOH in the second dosing device of alkali was 120 g/hr.

<Reference example 4>

As an ordinary operation, the operation was done in the same condition as in Reference example 1 except that pH of feed water of the second semi-permeable membrane unit 15 was set to 9.06. As a result, the permeate flow volume was 18 $m^3$/day, permeate TDS concentration was 1.1 mg/l, boron concentration was 0.184 mg/l, and pH of permeate was 9.26. In this case, the dosing amount of sulfuric acid in the dosing device of acid 6 was 0 g/hr, and the dosing amount of NaOH in the second dosing device of alkali 13 was 25.4 g/hr.

<Reference example 5>

After a continuous operation for 3 months in the condition of Reference example 1, the operation was done in the same condition as in Reference example 1 except that as the pre-treated seawater at high temperature (TDS concentration 3.4% by weight, water temperature 27°C, pH=7.5), and pH of feed water of the second semi-permeable membrane unit 15 was set to 9.2. As a result, the permeate flow volume was 18 m³/day, permeate TDS concentration was 2.6 mg/l, boron concentration was 0.47 mg/l, and pH of permeate was 9.3. In this case, the dosing amount of sulfuric acid in the dosing device of acid 6 was 0 g/hr, and the dosing amount of NaOH in the second dosing device of alkali 13 was 26 g/hr.

<Reference example 6>

As a washing operation, the operation was done in the same condition as in Reference example 5 except that sulfuric acid was added by a dosing device of acid 6 before a first semi-permeable membrane unit 8, and pH of feed water to the first semi-permeable membrane unit 8 was set to 3.0; there was no dosing of scale inhibitor by a second dosing device of scale inhibitor 12 before a second semi-permeable membrane unit 15, and no dosing of alkali by a second dosing device of alkali 13. As a result, the permeate flow volume was 18 m³/day, permeate TDS concentration was 2.9 mg/l, boron concentration was 0.67 mg/l, and pH of permeate was 4.6. In this case, the dosing amount of sulfuric acid in the dosing device of acid 6 was 520 g/hr, and the dosing amount of NaOH in the second dosing device of alkali was 0 g/day.

<Reference example 7>

As a washing operation, the operation was done in the same condition as in Reference example 5 except that sulfuric acid was added by a dosing device of acid 6 before a first semi-permeable membrane unit 8, and pH of feed water to the first semi-permeable membrane unit 8 was set to 3.0. As a result, the permeate flow volume was 18 m³/day, permeate TDS concentration was 2.8 mg/l, boron concentration was 0.47 mg/l, and pH of permeate was 9.3. In this case, the dosing amount of sulfuric acid in the dosing device of acid 6 was 520 g/hr, and the dosing amount of NaOH in the second dosing device of alkali was 125 g/hr.

<Reference example 8>

As an ordinary operation, the operation was done in the same condition as in Reference example 5 except that a pH of feed water of the second semi-permeable membrane unit 15 was set to 9. 26. As a result, the permeate flow volume was 18 m³/day, permeate TDS concentration was 2.7 mg/l, boron concentration was 0.45 mg/l, and pH of permeate was 9.41. In this case, the dosing amount of sulfuric acid in the dosing device of acid 6 was 0 g/hr, and the dosing amount of NaOH in the second dosing device of alkali 13 was 27 g/hr.

<Reference example 9>

As an ordinary operation, the operation was done in the same condition as in Reference example 8 except that 22 m³/day of the permeate flow volume of a first semi-permeable membrane unit of 24 m³/day was allotted to feed water of a second semi-permeable membrane unit 15, and a recovery factor was set to 72.7% so that the permeate flow volume of the second semi-permeable membrane unit was 16 m³/day. As a result, it was shown in the permeate of the second semi-permeable membrane unit that the TDS concentration was 2.6 mg/l, boron concentration was 0. 44 mg/l, and pH of permeate was 9.41. With this permeate, 2 m³/day of the permeate of the first semi-permeable membrane unit (permeate TDS concentration 196 mg/l, boron concentration 1.0 mg/l, and pH=6.13) was mixed; as a result, the total water volume of mixed water was 18 m³/day, permeate TDS concentration was 24.0 mg/l, boron concentration was 0.50 mg/l, and pH was 8.7. In this case, the dosing amount of sulfuric acid in the dosing device of acid 6 was 0 g/hr, and the dosing amount of NaOH in the second dosing device of alkali 13 was 24.8 g/hr.

<Example 1>

Assuming twelve machines shown in Fig. 7 in parallel, namely, apparatus provided with twelve desalination processes, while the ordinary operation explained in Reference example 1 is carried out, each desalination process undergoes the washing operation condition for lowering a pH explained in Reference example 2 for two hours per day in rotation of one process to another. The raw water volume summed up twelve desalination processes was calculated to be 960 m³/day and the permeate flow volume to be 216 m³/day, and as a result of that permeates of Reference example 1 and Reference example 2 were mixed by 11:1 as an average permeate in the twelve desalination processes, the permeate TDS concentration was as sufficiently low as 1.13 mg/l, and average boron concentration was 0.195 mg/l. In this case, it was calculated that the dosing amount of sulfuric acid per one desalination process in the dosing device of acid 6 was 1060 g/day, and the dosing amount of NaOH in the second dosing device of alkali was 550 g/day. Here, the WHO quality standard of drinking water is boron concentration of 0.5 mg/l; there is no standard on TDS concentration of drinking water in WHO, but for example, a quality standard of drinking water in Japan is TDS concentration of 500 mg/l.

<Comparative Example 1>

It was calculated in the same condition as in Example 1 except that each desalination process undergoes the washing operation condition for lowering a pH explained in Reference example 3. As a result, the raw water volume summed up twelve desalination processes was calculated to be 960 $m^3$/day and the permeate flow volume to be 216 $m^3$/day, and as a result of that permeates of Reference example 1 and Reference example 3 were mixed by 11:1 as an average permeate in the twelve desalination processes, the permeate TDS concentration was 1.1 mg/l, and boron concentration was 0.190 mg/l, giving the almost same water quality as Example 1. In this case, it was calculated that the dosing amount of sulfuric acid per one desalination process in the dosing device of acid 6 was 1060 g/day, and the dosing amount of NaOH in the second dosing device of alkali was 790 g/day, resulting in a consumption amount 1.4 times that in Example 1.

<Example 2>

It was calculated in the same condition as in Example 1 except that Reference example 4 was adopted as an ordinary operation condition for permeate boron concentration after mixing to be the same as Comparative Example 1. As a result, the raw water volume summed up twelve desalination processes was calculated to be 960 $m^3$/day and the permeate flow volume to be 216 $m^3$/day, and as a result of that permeates of Reference example 4 and Reference example 2 were mixed by 11:1 as an average permeate in the twelve desalination processes, the permeate TDS concentration was 1.13 mg/l, and boron concentration was 0.190 mg/l, giving the same boron concentration as in Example 1. In this case, it was calculated that the dosing amount of sulfuric acid per one desalination process in the dosing device of acid 6 was 1060 g/day, and the dosing amount of NaOH in the second dosing device of alkali was 559 g/day, resulting in the same consumption amount as in Example 1.

<Example 3>

In assuming the same operation condition as in Example 1 except that Reference example 5 and Reference example 6 were  adopted in place of Reference example 1 and Reference example 2. The raw water volume summed up twelve desalination processes was calculated to be 960 $m^3$/day and the permeate flow volume to be 216 $m^3$/day, and the average permeate TDS concentration of twelve desalination processes was as sufficiently low as 2. 63 mg/l, and the average boron concentration was 0.488 mg/l. This result satisfied the WHO quality standard of drinking water (boron concentration of 0.5 mg/l). In this case, it was calculated that the dosing amount of sulfuric acid per one desalination process in the dosing device of acid 6 was 1040 g/day, and the dosing amount of NaOH in the second dosing device of alkali was 572 g/day.

<Comparative Example 2>

It was calculated in the same condition as in Example 3 except that the washing operation condition for lowering a pH explained in Reference example 7 was adopted in place of Reference example 6. As a result, the raw water volume summed up twelve desalination processes was calculated to be 960 $m^3$/day and the permeate flow volume to be 216 $m^3$/day; the average permeate TDS concentration of twelve desalination processes was 2.63 mg/l, and the boron concentration was 0.470 mg/l. In this case, it was calculated that the dosing amount of sulfuric acid per one desalination process in the dosing device of acid 6 was 1040 g/day, and the dosing amount of NaOH in the second dosing device of alkali was 822 g/day, resulting in a consumption  amount 1.4 times that in Example 3..

<Example 4>

It was calculated in the same condition as in Example 3 except that Reference example 8 was adopted as an ordinary operation condition for permeate boron concentration after mixing to be the same as Comparative Example 2. As a result, the raw water volume summed up twelve desalination processes was calculated to be 960 $m^3$/day and the permeate flow volume to be 216 $m^3$/day; the average permeate TDS concentration of the twelve desalination processes was 2.72 mg/l, and the boron concentration was 0.470 mg/l. In this case, it was calculated that the dosing amount of sulfuric acid per one desalination process in the dosing device of acid 6 was 1040 g/day, and the dosing amount of NaOH in the second dosing device of alkali was 594 g/day.

<Example 5>

There was assumed a case that the number of desalination processes was 12, and acid washing time was 1 hour. In this case, the calculation was done assuming an operation that an ordinary operation without washing in all desalination processes was carried out for 12 hours in a day and one desalination process was subjected to acid washing in rotation for the residual 12 hours. Here, it was assumed that when all was in the ordinary operation, it was operated in the condition of Reference example 5 (namely, pH of feed water of the second semi-permeable membrane unit 15 was 9.2), and when washing was carried out in any one of desalination processes, it was operated in the condition of Reference example 4 (namely, pH of feed water of the second semi-permeable membrane unit 15 in an ordinary operation was raised to 9.26). As a result, through a day, the permeate flow volume was 18 $m^3$/day, permeate TDS concentration was 2. 6 to 2.72 mg/l, and boron concentration was constant at 0.470 mg/l. It was able to obtain permeate with a constant boron concentration even during which washing was carried out in any one of desalination processes. In this case, the dosing amount of sulfuric acid per one desalination process in the dosing device of acid 6 was 520 g/day, and the dosing amount of NaOH in the second dosing condition of alkali was 609 g/hr.

<Comparative Example 3>

The calculation was done assuming an operation in the same condition as in Example 5 (namely, pH of feed water of the second semi-permeable membrane unit 15 was 9.2) except by operating in the same condition as in Comparative Example 2 during which acid washing was carried out in any one of desalination processes. As a result, through a day, the permeate flow volume was 18 $m^3$/day, permeate TDS concentration was 2.6 to 2.8 mg/l, and boron concentration was constant at 0.470 mg/l. It was able to maintain a constant boron concentration even during which washing was carried out in any one of desalination processes, in this case, the dosing amount of sulfuric acid per one desalination process in the dosing device of acid 6 was 520 g/day, and the dosing amount of NaOH in the second dosing condition of alkali was 723 g/hr, which was larger than that of Example 5 by 19%.

<Example 6>

There was assumed a case that the number of desalination processes was 12, and acid washing time was 1 hour. In this case, the calculation was done assuming an operation that an ordinary operation without washing in all desalination processes was carried out for 12 hours in a day and one desalination process was subjected to acid washing in rotation for the residual 12 hours. Here, the calculation was done assuming an operation that when all was in the ordinary operation, it was operated in the condition of Reference example 9 (namely, feed water volume of the second semi-permeable membrane unit 15 was 22 $m^3$/day, bypass flow volume was 2 $m^3$/day), and when it was operated during which washing was carried out in any one of desalination processes, in the condition of Reference example 9 for six lines of desalination processes carrying out an ordinary operation, in the condition of Reference example 8 for five lines (without bypassing), and in the condition of Reference example 6 for an acid washing line (without bypassing). As a result, through a day, it was shown in the total permeate that the flow volume was 18 $m^3$/day, permeate TDS concentration was 13.4 to 24 mg/l, and boron concentration was almost constant at 0.495 to 0.50 mg/l. It was able to maintain a constant boron concentration satisfying the WHO water quality standard even during which washing was carried out in any one of desalination processes. In this case, the dosing amount of sulfuric acid per one desalination process in the dosing device of acid 6 was 520 g/day, and the dosing amount of NaOH in the second dosing condition of alkali was 581 g/hr.

Additionally, Table 1 shows the condition and result in Reference examples 1 to 9, and Table 2 shows the condition and result in Examples 1 to 6, and Comparative Examples 1 to 3.

Table 1

| | Operation mode | First semi-permeable membrane unit | | Second semi-permeable membrane unit | | | | | | |
|---|---|---|---|---|---|---|---|---|---|---|
| | | pH of feed water [-] | Feed water temperature [°C] | Permeate flow volume [m³/day] | Permeate TDS [mg/l] | Permeate boron [mg/l] | pH of feed water [-] | pH of permeate [-] | Sulfuric acid consumption [g/hr] | NaOH consumption [g/hr] |
| Reference example 1 | Ordinary | 7.5 | 22 | 18 | 1.1 | 0.19 | 9.0 | 9.2 | 0 | 25 |
| Reference example 2 | Acid shock+alkali absent | 3.0 | 22 | 18 | 1.5 | 0.25 | - | 4.5 | 530 | 0 |
| Reference example 3 | Acid shock+alkali present | 3.0 | 22 | 18 | 1.1 | 0.19 | 9.0 | 9.2 | 530 | 120 |
| Reference example 4 | Ordinary | 7.5 | 22 | 18 | 1.1 | 0.184 | 9.06 | 9.26 | 0 | 25.4 |
| Reference example 5 | Ordinary | 7.5 | 27 | 18 | 2.6 | 0.47 | 9.2 | 9.3 | 0 | 26 |
| Reference example 6 | Acid shock+alkali absent | 3.0 | 27 | 18 | 2.9 | 0.69 | - | 4.6 | 520 | 0 |
| Reference example 7 | Acid shock+alkali present | 3.0 | 27 | 18 | 2.8 | 0.47 | 9.2 | 9.3 | 520 | 125 |
| Reference example 8 | Ordinary | 7.5 | 27 | 18 | 2.7 | 0.45 | 9.26 | 9.41 | 0 | 27 |
| Reference example 9 | ordinary | 7.5 | 27 | 18* | 24* | 0.5* | 9.26 | 8.7* | 0 | 24.8 |

* Value of a mixed water of permeate of the second semi-permeable membrane unit and permeate of the first semi-permeable membrane unit bypassed said second semi-permeable membrane unit

Table 2

| | Combination (water volume ratio) | Second semi-permeable membrane unit | | | | |
|---|---|---|---|---|---|---|
| | | Permeate flow volume [m³/day] | Permeate TDS [mg/l] | Permeate boron [mg/l] | Sulfuric acid consumption [g/day] | NaOH consumption [g/day] |
| Example 1 | Reference example 1(11) & Reference example 2(1) | 216 | 1.13 | 0.195 | 1060 | 550 |
| Comparative Example 1 | Reference example 1(11) & Reference example 3(1) | 216 | 1.10 | 0.190 | 1060 | 790 |
| Example 2 | Reference example 4(11) & Reference example 2(1) | 216 | 1.13 | 0.190 | 1060 | 559 |
| Example 3 | Reference example 5(11) & Reference example 6(1) | 216 | 2.63 | 0.488 | 1040 | 572 |
| Comparative Example 2 | Reference example 5(11) & Reference example 7(1) | 216 | 2.62 | 0.470 | 1040 | 822 |
| Example 4 | Reference example 8(11) & Reference example 6(1) | 216 | 2.72 | 0.470 | 1040 | 594 |
| Example 5 | Ordinary (Reference example 8)/ while washing (Example 4) | 216 | 2.6/2.72 | 0.470 | 520 | 609 |
| Comparative Example 3 | Ordinary (Reference example B)/ While washing (Comparative Example 2) | 216 | 2.6/2.8 | 0.470 | 520 | 723 |
| Example 6 | Reference example 9(6) + Reference example 8(5) & Reference example 6(1) | 216* | 13.4* | 0.495* | 520 | 581 |

* Value of a mixed water of permeate of the second semi-permeable membrane unit and permeate of the first semi-permeable membrane unit bypassed said second semi-permeable membrane unit

## Claims

1. A method for producing fresh water, having a plurality of desalination processes (23) in parallel where raw water (1) or pre-treated water obtained by pre-treatment of raw water is treated by a first semi-permeable membrane unit A1, B1 (8) as feed water of a first semi-permeable membrane unit A1, B1 (8), and the resulting permeate of the first semi-permeable membrane unit (9) of which a pH is raised by use of a dosing device of alkali (13) is treated in the second semi-permeable membrane unit A2, B2 (15) as feed water of a second semi-permeable membrane unit, comprising: temporarily conducting a washing in a desalination process A of one of the plurality of desalination processes (23); by use of a dosing device of acid (6) without alkali lowering a pH of raw water (1) or pre-treated water in said washing to be supplied to a first semi-permeable membrane unit A1 (8) and to make a pH of the resulting permeate of the first semi-permeable membrane unit (9) to be supplied to a second semi-permeable membrane unit A2 (15) lower than that of feed water (9) of a second semi-permeable membrane unit B2 (15) in another desalination process B of one of the plurality of desalination processes (23) not conducting a washing in part; and mixing the permeate (16) obtained from the second semi-permeable membrane unit A2 (15) with the permeate (16) obtained from the second semi-permeable membrane unit B2 (15) in said other desalination process B.

2. The method for producing fresh water of claim 1, wherein said washing is sequentially conducted in the whole desalination processes (23).

3. The method for producing fresh water of claim 1 or 2, comprising: temporarily setting a time not conducting said washing in the whole desalination processes (23); and making a pH of the feed water of the second semi-permeable membrane unit (9) in said other desalination process B during which washing is conducted in said part of desalination process A higher than a pH of the feed water of the second semi-permeable membrane unit (9) in said other desalination process B during which washing is not conducted in the whole desalination processes (23).

4. The method for producing fresh water of any one of claims 1 to 3, obtaining fresh water by not treating part (permeate a) of said permeate of the first semi-permeable membrane unit (9) in the second semi-permeable membrane unit A2, B2 (15), and raising a pH of the residual (permeate b) as the feed water of the second semi-permeable membrane unit (9) to be treated in the second semi-permeable membrane unit A2, B2 (15) and mixed with said part (the permeate a), comprising: temporarily setting a time not conducting said washing in the whole desalination processes (23); and making a water volume of said residual (permeate b) during which washing is conduced in said part of desalination process A larger than a water volume during which washing is not conducted in the whole desalination processes (23).

5. The method for producing fresh water of any one of claims 1 to 4, wherein the pH of the feed water of the second semi-permeable membrane unit B2 (9) in said other desalination process B is raised to 8 or more.

6. The method for producing fresh water of any one of claims 1 to 5, wherein the pH of the feed water of the first semi-permeable membrane unit A1 (8) in said part of desalination process A is set to 4 or less.

7. The method for producing fresh water of any one of claims 1 to 6, wherein an operating time for lowering the pH of the feed water of the first semi-permeable membrane unit A1 (8) in said part of desalination process A is in a range of 0.5 to 2.5 hr/day.

8. The method for producing fresh water of any one of claims 1 to 7, wherein the number (a) of said desalination processes and an operating time (b) for lowering the pH of the feed water of the first semi-permeable membrane unit A1 (8) in said part of desalination process satisfy the following relationship.

$$20 \le a \times b \le 30, \ a \ge 12.$$

**Patentansprüche**

1. Verfahren zum Herstellen von Frischwasser, das eine Mehrzahl von parallelen Entsalzungsprozessen (23) aufweist, wobei Rohwasser (1) oder vorbehandeltes Wasser, das durch eine Vorbehandlung des Rohwassers erhalten wird, durch eine erste semipermeable Membraneinheit A1, B1 (8) als Speisewasser einer ersten semipermeablen Membraneinheit A1, B1 (8) behandelt wird, und das resultierende Permeat der ersten semipermeablen Membraneinheit (9), dessen PH-Wert durch die Verwendung einer Alkali-Dosiervorrichtung (13) angehoben wird, in der zweiten semipermeablen Membraneinheit A2, B2 (15) als Speisewasser einer zweiten semipermeablen Membraneinheit behandelt wird, umfassend:

ein temporäres Durchführen eines Waschens in einem Entsalzungsprozess A von einem aus der Mehrzahl von Entsalzungsprozessen (23); durch Verwenden einer Säure-Dosiervorrichtung (6) ohne Alkali, die beim Waschen einen PH-Wert des Rohwassers (1) oder des vorbehandelten Wassers senkt, das einer ersten semipermeablen Membraneinheit A1 (8) zugeführt wird, und

Bilden eines PH-Werts des resultierenden Permeats der ersten semipermeablen Membraneinheit (9), das einer zweiten semipermeablen Membraneinheit A2 (15) zugeführt wird, der niedriger als jener des Speisewassers (9) einer zweiten semipermeablen Membraneinheit B2 (15) in einem anderen Entsalzungsprozess B von einem aus der Mehrzahl von Entsalzungsprozessen (23) ist, der kein teilweises Waschen durchführt; und Mischen des Permeats (16), das aus der zweiten semipermeablen Membraneinheit A2 (15) erhalten wird, mit dem Permeat (16), das aus der zweiten semipermeablen Membraneinheit B2 (15) in dem anderen Entsalzungsprozess B erhalten wird.

2. Verfahren zum Herstellen von Frischwasser nach Anspruch 1, wobei das Waschen in den ganzen Entsalzungsprozessen (23) sequenziell durchgeführt wird.

3. Verfahren zum Herstellen von Frischwasser nach Anspruch 1 oder 2, umfassend:

temporäres Einstellen einer Zeit, bei der das Waschen in den ganzen Entsalzungsprozessen (23) nicht durchführt wird; und Herstellen eines pH-Werts des Speisewassers der zweiten semipermeablen Membraneinheit (9) im anderen Entsalzungsprozess B, während der das Waschen im Teil des Entsalzungsprozesses A durchgeführt wird, der höher als ein pH-Wert des Speisewassers der zweiten semipermeablen Membraneinheit (9) im anderen Entsalzungsprozess B ist, während dem das Waschen in den ganzen Entsalzungsprozessen (23) nicht durchführt wird.

4. Verfahren zum Herstellen von Frischwasser nach einem der Ansprüche 1 bis 3, wobei Frischwasser durch Nichtbehandeln eines Teils (Permeat a) des Permeats der ersten semipermeablen Membraneinheit (9) in der zweiten semipermeablen Membraneinheit A2, B2 (15), und Anheben eines pH-Werts des Rests (Permeat b) erhalten wird, wenn das Speisewasser der zweiten semipermeablen Membraneinheit (9) in der zweiten semipermeablen Membraneinheit A2, B2 (15) behandelt und mit dem Teil (Permeat a) gemischt werden soll, umfassend:

temporäres Einstellen einer Zeit, bei der das Waschen in den ganzen Entsalzungsprozessen (23) nicht durchführt wird; und Herstellen eines Wasservolumens des Rests (Permeat b), während das Waschen im Teil des Entsalzungsprozesses A durchgeführt wird, das größer als ein Wasservolumen ist, während das Waschen in den ganzen Entsalzungsprozessen (23) nicht ausgeführt wird.

5. Verfahren zum Herstellen von Frischwasser nach einem der Ansprüche 1 bis 4, wobei der pH-Wert des Speisewassers der zweiten semipermeablen Membraneinheit B2 (9) im anderen Entsalzungsprozess B auf 8 oder höher angehoben wird.

6. Verfahren zum Herstellen von Frischwasser nach einem der Ansprüche 1 bis 5, wobei der pH-Wert des Speisewassers der ersten semipermeablen Membraneinheit A1 (8) im Teil des Entsalzungsprozesses A auf 4 oder niedriger eingestellt wird.

7. Verfahren zum Herstellen von Frischwasser nach einem der Ansprüche 1 bis 6, wobei eine Betriebsdauer zum Senken des pH-Werts des Speisewassers der ersten semipermeablen Membraneinheit A1 (8) im Teil des Entsalzungsprozesses A in einem Bereich von 0,5 bis 2,5 Std./Tag liegt.

8. Verfahren zum Herstellen von Frischwasser nach einem der Ansprüche 1 bis 7, wobei die Anzahl (a) der Entsalzungsprozesse und eine Betriebsdauer (b) zum Senken des pH-Werts des Speisewassers der ersten semipermeablen Membraneinheit A1 (8) im Teil des Entsalzungsprozesses die nachfolgende Gleichung erfüllt:

$$20 \leq axb \leq 30, a \geq 12$$

**Revendications**

1. Procédé de production d'eau douce, comportant une pluralité de processus de désalinisation (23) en parallèle où l'eau brute (1) ou l'eau prétraitée obtenue par prétraitement d'eau brute est traitée par une première unité de membrane semi-perméable A1, B1 (8) en tant qu'eau d'alimentation d'une première unité de membrane semi-perméable A1, B1 (8), et le perméat résultant de la première unité de membrane semi-perméable (9) dont un pH est augmenté par l'utilisation d'un dispositif de dosage de base (13) est traité dans la deuxième unité de membrane semi-perméable A2, B2 (15) en tant qu'eau d'alimentation d'une deuxième unité de membrane semi-perméable, comprenant : l'exécution provisoire d'un lavage dans un processus de désalinisation A de l'un de la pluralité de processus de désalinisation (23) ; par l'utilisation d'un dispositif de dosage d'acide (6) sans base, la réduction d'un pH d'eau brute (1) ou d'eau prétraitée dans ledit lavage à fournir à une première unité de membrane semi-perméable A1 (8) et le réglage d'un pH du perméat résultant de la première unité de membrane semi-perméable (9) à fournir à une deuxième unité de membrane semi-perméable A2 (15) pour qu'il soit inférieur à celui de l'eau d'alimentation (9) d'une deuxième unité de membrane semi-perméable B2 (15) dans un autre processus de désalinisation B de l'un de la pluralité de processus de désalinisation (23) n'effectuant pas un lavage dans une partie ; et le mélange du perméat (16) obtenu à partir de la deuxième unité de membrane semi-perméable A2 (15) avec le perméat (16) obtenu à partir de la deuxième unité de membrane semi-perméable B2 (15) dans ledit autre processus de désalinisation B.

2. Procédé de production d'eau douce selon la revendication 1, dans lequel ledit lavage est effectué séquentiellement dans l'intégralité des processus de désalinisation (23).

3. Procédé de production d'eau douce selon la revendication 1 ou 2, comprenant : le réglage provisoire d'un temps au cours duquel ne pas exécuter ledit lavage dans l'intégralité des processus de désalinisation (23) ; et le réglage d'un pH de l'eau d'alimentation de la deuxième unité de membrane semi-perméable (9) dans ledit autre processus de désalinisation B au cours duquel un lavage est effectué dans ladite partie du processus de désalinisation A pour qu'il soit supérieur à un pH de l'eau d'alimentation de la deuxième unité de membrane semi-perméable (9) dans ledit autre processus de désalinisation B au cours duquel un lavage n'est pas effectué dans l'intégralité des processus de désalinisation (23).

4. Procédé de production d'eau douce selon l'une quelconque des revendications 1 à 3, l'obtention d'eau douce en ne traitant pas une partie (perméat a) dudit perméat de la première unité de membrane semi-perméable (9) dans la deuxième unité de membrane semi-perméable A2, B2 (15), et l'augmentation d'un pH du résiduel (perméat b) en tant que l'eau d'alimentation de la deuxième unité de membrane semi-perméable (9) à traiter dans la deuxième unité de membrane semi-perméable A2, B2 (15) et à mélanger avec ladite partie (perméat a), comprenant : le réglage provisoire d'un temps au cours duquel ne pas effectuer ledit lavage dans l'intégralité des processus de désalinisation (23) ; et le réglage d'un volume d'eau dudit résiduel (perméat b) pendant qu'un lavage est effectué dans ladite partie du processus de désalinisation A pour qu'il soit supérieur à un volume d'eau pendant qu'un lavage n'est pas effectué dans l'intégralité des processus de désalinisation (23).

5. Procédé de production d'eau douce selon l'une quelconque des revendications 1 à 4, dans lequel le pH de l'eau d'alimentation de la deuxième unité de membrane semi-perméable B2 (9) dans ledit autre processus de désalinisation B est augmenté à 8 ou plus.

6. Procédé de production d'eau douce selon l'une quelconque des revendications 1 à 5, dans lequel le pH de l'eau d'alimentation de la première unité de membrane semi-perméable A1 (8) dans ladite partie du processus de désalinisation A est réglé à 4 ou moins.

7. Procédé de production d'eau douce selon l'une quelconque des revendications 1 à 6, dans lequel un temps de fonctionnement pour réduire le pH de l'eau d'alimentation de la première unité de membrane semi-perméable A1 (8) dans ladite partie du processus de désalinisation A est dans une plage de 0,5 à 2,5 heures/jour.

8. Procédé de production d'eau douce selon l'une quelconque des revendications 1 à 7, dans lequel le nombre (a) desdits processus de désalinisation et un temps de fonctionnement (b) pour réduire le pH de l'eau d'alimentation de la première unité de membrane semi-perméable A1 (8) dans ladite partie du processus de désalinisation répondent à la relation suivante :

$$20 \leq a \times b \leq 30, a \geq 12.$$

Fig.1

Fig.2

Fig.3

Fig.4

Fig.5

Fig.6

Fig.7

Fig.8

Fig.9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3087750 B
- JP 3319321 B
- WO 2005009908 A2
- JP 11070325 A

**Non-patent literature cited in the description**

- AQUCAR RO-20 catalog. Dow Chemical Company, 2005
- **A.B. HAMIDA ; I MOCH JR.** *Desalination & Water Reuse,* 1996, vol. 6/3, 40-45
- **L.E. APPLEGATE ; C.W. ERKENBRECHER.** *Desalination,* 1987, vol. 65, 331-359
- **M. TANIGUCHI et al.** *Journal of Membrane Science,* 2000, vol. 183, 259-267
- **M. TANIGUCHI et al.** *AIChE Journal,* 2000, vol. 46, 1967-1973
- *Office of Saline Water Research and Development Progress Report,* 1968